# EUROPÄISCHE PATENTANMELDUNG

(11) **EP 4 696 524 A1**
(43) Veröffentlichungstag der Anmeldung: **18.02.2026**
(21) Anmeldenummer: 25186494.8
(22) Anmeldetag: 01.07.2025
(51) Int. Cl.: B60C 11/12, B60C 11/13

(54) **FAHRZEUGREIFEN**

(30) Priorität: 13.08.2024 DE 102024207691
(71) Anmelder: Continental Reifen Deutschland GmbH, 30175 Hannover (DE)
(72) Erfinder: Valek, Branislav, 020 01 Púchov (SK)
(74) Vertreter: Continental Corporation

(57) **Zusammenfassung**

Fahrzeugreifen mit einem Laufstreifen mit Profilpositiven, wie Profilblöcken (1) oder Profilrippen, mit Einschnitten (4) mit zwei sich in radialer Richtung erstreckenden Einschnittwänden (5, 5'), die zueinander einen insbesondere konstanten gegenseitigen Abstand, welcher der Einschnittbreite (b₁) entspricht, von 0,30 mm bis 1,50 mm, insbesondere 0,40 bis 1,00 mm aufweisen, wobei jede Einschnittwand (5, 5') mit einer Struktur aus parallel zueinander verlaufenden Mikrorillen (6) und am Niveau der Einschnittwände (5, 5') befindlichen Brücken (7) zwischen den Mikrorillen (6) versehen ist, wobei die Mikrorillen (6) eine senkrecht zu den Einschnittwänden (5,5') ermittelten Tiefe (t₂) von 0,10 mm bis 1,00 mm und eine am Niveau der Einschnittwände (5, 5') ermittelte Breite (b₂) von 0,10 mm bis 1,00 mm aufweisen, und wobei die Strukturen aus den Mikrorillen (6) und Brücken (7) an den beiden Einschnittwänden (5, 5') übereinstimmen und aus gleich dimensionierten Mikrorillen (6) bestehen.

Die Mikrorillen (6) auf der einen Einschnittwand (5) verlaufen zu den Mikrorillen (6) auf der gegenüberliegenden Einschnittwand (5') parallel.

## Beschreibung

Die Erfindung betrifft einen Fahrzeugreifen mit einem Laufstreifen mit Profilpositiven, wie Profilblöcken oder Profilrippen, mit Einschnitten mit zwei sich in radialer Richtung erstreckenden Einschnittwänden, die zueinander einen insbesondere konstanten gegenseitigen Abstand, welcher der Einschnittbreite entspricht, von 0,30 mm bis 1,50 mm, insbesondere 0,40 bis 1,00 mm aufweisen, wobei jede Einschnittwand mit einer Struktur aus parallel zueinander verlaufenden Mikrorillen und am Niveau der Einschnittwände befindlichen Brücken zwischen den Mikrorillen versehen ist, wobei die Mikrorillen eine senkrecht zu den Einschnittwänden ermittelten Tiefe von 0,10 mm bis 1,00 mm und eine am Niveau der Einschnittwände ermittelte Breite von 0,10 mm bis 1,00 mm aufweisen, und wobei die Strukturen aus den Mikrorillen und Brücken an den beiden Einschnittwänden übereinstimmen und aus gleich dimensionierten Mikrorillen bestehen.

Ein derartiger Fahrzeugreifen ist aus der US 6,116,310 B bekannt. Dieser Fahrzeugreifen weist Profilpositive, beispielsweise Profilblöcke, mit Einschnitten auf, die in eine Tiefe von bis zu 9,50 mm reichen und wobei auf jeder Einschnittwand eine Struktur aus parallel zueinander verlaufenden Mikrorillen und Brücken zwischen den Mikrorillen ausgebildet ist. Die Mikrorillen sind sämtlich gleich gestaltet und auf der einen Einschnittwand übereinstimmend zu jenen auf der anderen Einschnittwand ausgebildet, wobei die Mikrorillen auf den Einschnittwänden jeweils unter einem spitzen Winkel zur radialen Richtung verlaufen und einander kreuzen. Einschnitte mit derart ausgebildeten Einschnittwänden sollen bei einer guten Nässeperformance eine gute Eisperformance des Laufstreifens sicherstellen, wobei Kanteneffekte und Blocksteifigkeit erhalten bleiben sollen. Dies soll insbesondere dadurch erreicht werden, dass sich die Einschnittwände unter Brems- oder Traktionsbelastung aneinander abstützen.

Aus der JP H08258515 A ist ein Fahrzeugreifen bekannt, dessen Laufstreifen durch in Umfangsrichtung umlaufende Rillen und durch Querrillen in Profilblöcke gegliedert ist, die jeweils mit zumindest einem Einschnitt versehen sind, an dessen Einschnittwänden jeweils über deren gesamte Fläche eine Vielzahl von "Unregelmäßigkeiten" ausgebildet ist. Diese Unregelmäßigkeiten sind einzelne Vorsprünge und/oder Vertiefungen, welche eine Höhe bzw. Tiefe von mindestens 50 µm und bis zu 200 µm aufweisen. Dadurch soll bei einem Reifen, dessen Laufstreifen aus einem geschäumten Gummimaterial besteht, die Einschnittwände nach der Vulkanisation des Reifens bei der Entformung aus der Vulkanisationsform nicht aneinanderkleben.

Die EP 3 441 241 A1 offenbart einen Fahrzeugreifen mit einem Laufstreifen mit Profilpositiven, wie Profilblöcken oder Profilrippen, welche mit Einschnitten einer Breite von 0,40 mm bis 0,80 mm versehen sind, wobei an der einen Einschnittwand zumindest ein den jeweiligen Einschnitt lokal verschmälernder Vorsprung und an der anderen Einschnittwand zu jedem Vorsprung eine korrespondierende Vertiefung ausgebildet ist. Der Laufstreifen ist laufrichtungsgebunden ausgeführt, sodass die eine, die einlaufende Einschnittkante, an der Laufstreifenperipherie beim Abrollen des Reifens bei Vorwärtsfahrt zuerst in den Untergrund eintritt. Der Vorsprung an der einen Einschnittwand ist gegenüber seiner korrespondierenden Vertiefung an der anderen Einschnittwand in radialer Richtung versetzt, wobei der Vorsprung bzw. die Vertiefung, welcher bzw. welche sich an der von der einlaufenden Einschnittkante ausgehenden Einschnittwand befindet, gegenüber der Vertiefung bzw. dem Vorsprung, welche bzw. welcher sich an der von der auslaufenden Einschnittkante ausgehenden Einschnittwand befindet, tiefer im Inneren des Einschnitts ausgebildet ist. Dieser Versatz der Vorsprünge bewirkt unter Belastung ein Ineinandergreifen der Vorsprünge und Vertiefungen und wirkt somit einer unerwünschten Verformung der Profilpositive entgegen.

Der Erfindung liegt die Aufgabe zugrunde, einen Fahrzeugreifen der eingangs genannten Art derart zu gestalten, dass zwischen den Einschnittwänden von Einschnitten im Laufstreifen unter Belastung ein gegenseitiger Kontakt stattfindet, der eine besonders effektive Erhöhung der Reibungsenergie zwischen den Einschnittwänden bewirkt und daher einer Verformung des Profilpositivs unter Belastung besonders gut entgegenwirkt.

Gelöst wird die gestellte Aufgabe erfindungsgemäß dadurch, dass die Mikrorillen auf der einen Einschnittwand zu den Mikrorillen auf der gegenüberliegenden Einschnittwand parallel verlaufen.

Die gemäß der Erfindung auf den beiden Einschnittwänden parallel zueinander verlaufenden Mikrorillen wirken unter Belastung bei gegenseitigem Kontakt einer Verformung der Profilpositive besonders effektiv entgegen, insbesondere durch die sich einstellende hohe Reibungsenergie und die Möglichkeit einer gegenseitigen Verzahnung bzw. des gegenseitigen Eingriffs der Struktur aus Mikrorillen und Brücken zwischen den Mikrorillen.

Bei einer bevorzugten Ausführung beträgt die Tiefe der Mikrorillen 0,20 mm bis 0,50 mm, bevorzugt bis 0,30 mm. Die am Niveau der Einschnittwände ermittelte Breite der Mikrorillen beträgt bevorzugt ebenfalls 0,20 mm bis 0,50 mm, bevorzugt bis 0,30 mm. Dabei ist es besonders vorteilhaft, wenn die zwischen den aufeinanderfolgenden Mikrorillen befindlichen Brücken am Niveau der Einschnittwände eine Breite von 0,05 mm bis 1,00 mm, insbesondere 0,10 mm bis 0,50 mm, bevorzugt bis 0,30 mm, aufweisen. Bei bevorzugten Ausführungen ist daher die Struktur aus Mikrorillen und Brücken sehr klein bzw. sogar winzig und daher besonders gut dafür geeignet, für eine besonders hohe Reibungsenergie zwischen den Einschnittwänden unter Belastung zu sorgen.

Insbesondere sind Ausführungen der Struktur von Vorteil, bei welchen die Mikrorillen und die Brücken im Querschnitt jeweils Wölbungen sind und derart gestaltet sind, dass sie unmittelbar aneinander anschließen. Es folgt daher jeweils eine gewölbte Brücke auf eine gewölbte Mikrorille, wobei die Brücken am Niveau der Einschnittwände, im Querschnitt, nur punktuell vorhanden sind, wobei gerade bei dieser Ausführungsform eine besonders hohe Reibungsenergie zwischen den Einschnittwänden auftreten kann.

Bei einer weiteren bevorzugten Ausführungsform liegen die auf der einen Einschnittwand vorgesehenen Mikrorillen jenen, die auf der anderen Einschnittwand ausgebildet sind, gegenüber. Bei einer alternativen, ebenfalls bevorzugten Ausführung sind die Mikrorillen auf der einen Einschnittwand gegenüber den Mikrorillen auf der anderen Einschnittwand versetzt, wobei beispielsweise die Mikrorillen auf der einen Einschnittwand den Brücken auf der anderen Einschnittwand gegenüber liegen können. Bei all diesen Varianten kann je nach auftretender Belastung des Laufstreifens beim Abrollen des Reifens am Untergrund ein Eingriff von Brücken auf der einen Einschnittwand mit Mikrorillen auf der anderen Einschnittwand erfolgen. Dies hängt unter anderem davon ab, ob die unter Belastung wirkenden Kräfte auf Traktion oder auf Bremsen zurückzuführen sind und in welcher Position sich die Profilpositive im Laufstreifen befinden.

Es gibt eine Vielzahl von Möglichkeiten, die Mikrorillen bezüglich ihrer Querschnittsform auszuführen, um Einfluss auf das Ausmaß der sich einstellenden Reibungsenergie zwischen den Einschnittwänden zu nehmen.

Bei einer bevorzugten Ausführung weisen die Mikrorillen einen U-förmigen Querschnitt mit einem parallel zu den Einschnittwänden verlaufenden Boden und zwei im rechten Winkel zu den Einschnittwänden verlaufenden Rillenflanken auf.

Bei einer weiteren bevorzugten Ausführung sind die Mikrorillen im Querschnitt bogen- oder kuppelförmig gerundet, insbesondere entlang eines Kreisbogens, beispielsweise eines Halbkreises, oder es weisen die Mikrorillen einen dreieckigen oder dreieckähnlichen Querschnitt auf.

Für eine besonders effektive Reibungsenergie zwischen den Einschnittwänden ist es ferner von Vorteil, wenn die Anzahl der Mikrorillen pro Einschnittwand fünf bis einhundert, insbesondere zehn bis fünfzig, beträgt.

Bezüglich des Verlaufs der Mikrorillen und Brücken über die Einschnittwände steht eine Vielzahl von Möglichkeiten zur Verfügung, insbesondere die im Folgenden erwähnten.

Besonders bevorzugt sind Ausführungen, bei welchen die Mikrorillen gerade und dabei parallel zur Laufstreifenperipherie oder unter einem Winkel von bis zu 90° zur Laufstreifenperipherie verlaufen. Die Mikrorillen können ferner über die Erstreckung der Einschnittwand insgesamt bogenförmig verlaufen. Bei einer weiteren bevorzugten Ausführung besteht die Struktur aus Mikrorillen und Brücken auf jeder Einschnittwand aus mehreren Streifen mit einer insbesondere konstanten Breite von vorzugsweise 3,00 mm bis 10,00 mm.

Die Mikrorillen und Brücken können sich, je nach ihrem Verlauf über die Einschnittwände, auch bis zur Laufstreifenperipherie und bis zu den Einmündungen der Einschnitte in Rillen an den Profilpositivflanken erstrecken. Bevorzugt ist eine Ausführung, bei welcher die Einschnittwände unmittelbar an die Laufstreifenperipherie und den Einschnittgrund anschließend über einen Abschnitt mit einer Breite von mindestens 0,50 mm bis insbesondere 1,00 mm, frei von der Struktur aus Mikrorillen und Brücken sind.

Weitere Merkmale, Vorteile und Einzelheiten der Erfindung werden nun anhand der schematischen Zeichnung, die Ausführungsbeispiel darstellt, näher beschrieben.

Dabei zeigen
Fig. 1 eine Schrägansicht von Profilblöcken eines Laufstreifens eines Fahrzeugreifens,
Fig. 2 eine Schnittdarstellung entlang der durch die Linie II-II in Fig. 1 gekennzeichneten Schnittebene,
Fig. 3 bis Fig. 7 weitere Ausführungsvarianten der Erfindung, jeweils anhand eines Abschnitts des Querschnitts eines Einschnitts, ansonsten analog zu Fig. 2, und
Fig. 8 bis Fig. 10 Draufsichten auf eine Einschnittwand mit unterschiedlichen Ausführungsvarianten des Verlaufs von Mikrorillen.

Fahrzeugreifen gemäß der Erfindung sind Reifen für Kraftfahrzeuge, insbesondere für mehrspurige Kraftfahrzeuge, bevorzugt für Personenkraftwagen (PKW), Vans (Transporter), SUVs, Lastkraftwagen (LKW) oder Busse, besonders bevorzugt Fahrzeugluftreifen in Radialbauart.

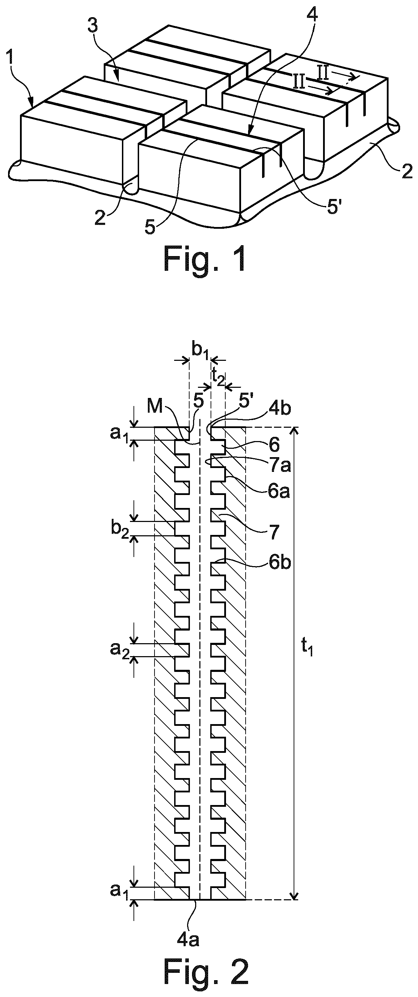

Fig. 1 zeigt jeweils zwei zu je einer mittigen oder halbmittigen Profilblockreihe gehörende Profilblöcke 1 eines Laufstreifens eines Fahrzeugreifens. Die Profilblockreihen sind seitlich von angedeuteten, Großteils die vorgesehene Profiltiefe aufweisenden Umfangsrillen 2 begrenzt. Zwischen den in Umfangsrichtung aufeinanderfolgenden Profilblöcken 1 sind Querrillen 3 vorhanden, welche insbesondere unter einem Winkel ≤ 50° zur axialen Richtung orientiert sind. Anstelle von Profilblockreihen können im Laufstreifen in Umfangsrichtung umlaufende Profilrippen ausgebildet sind, die durch Rillen oder Einschnitte blockartig strukturiert sind.

Wie Fig. 1 zeigt, ist jeder Profilblock 1 von zwei Einschnitten 4 durchquert, welche gerade und parallel zu den Querrillen 3 verlaufen. Wie etwa Fig. 2 zeigt, weisen die Einschnitte 4 jeweils zwei Einschnittwände 5, 5', einen Einschnittgrund 4a und in radialer Richtung eine maximale Tiefe t₁ auf, welche 30 % bis 100 % der Profiltiefe beträgt. Die Einschnitte 4 können abschnittsweise, beispielsweise an ihren Randabschnitten, eine geringere Tiefe aufweisen. An der Laufstreifenperipherie besitzen die Einschnitte 4 eine Breite b₁ von 0,30 mm bis 1,50 mm, insbesondere von 0,40 mm bis 1,20 mm. Diese, insbesondere konstante Breite b₁ wird als kürzester Abstand zwischen den beiden Einschnittkanten 4b an der Laufstreifenperipherie ermittelt und entspricht dem gegenseitigen Abstand der Einschnittwände 5, 5'.

Bei den in Fig. 2 bis 7 gezeigten Ausführungsbeispielen sind die Einschnittwände 5, 5' jeweils mit einer Struktur aus einer Vielzahl von Mikrorillen 6 und zwischen den Mikrorillen 6 am Niveau der Einschnittwände 5, 5 befindlichen oder bis zum Niveau der Einschnittwände 5, 5 reichenden Brücken 7 versehen, wobei die Mikrorillen 6 und die Brücken 7 in den Beispielen parallel zur Laufstreifenperipherie sowie zu den Einschnittkanten 4b an der Laufstreifenperipherie verlaufen. Wie etwa Fig. 2 zeigt, sind die Einschnittwände 5, 5' in Abschnitten, die unmittelbar an die Laufstreifenperipherie und den Einschnittgrund 4a anschließen und eine Breite a₁ von mindestens 0,50 mm bis insbesondere 1,00 mm aufweisen, frei von der Struktur aus Mikrorillen 6 und Brücken 7. Die Struktur aus Mikrorillen 6 und Brücken 7 kann bis zu den in radialer Richtung verlaufenden Seitenkanten der Einschnittwände 5, 5' verlaufend ausgebildet sein.

Die Strukturen aus Mikrorillen 6 und Brücken 7 sind an den beiden Einschnittwänden 5, 5' übereinstimmend und aus gleich dimensionierten Mikrorillen 6 bestehend sowie bei der bevorzugten Ausführung (wie dargestellt) symmetrisch zu der in den Figuren 2 bis 7 angedeuteten, in radialer Richtung verlaufenden Einschnitt-Mittelebene M gestaltet. Bei alternativen, nicht gezeigten Ausführungen ist die auf der einen Einschnittwand 5 ausgebildete Struktur gegenüber der auf der zweiten Einschnittwand 5' ausgebildeten Struktur in radialer Richtung versetzt, beispielsweise derart, dass jeweils eine Mikrorille 6 auf der einen Einschnittwand 5 einer Brücke 7 zwischen zwei Mikrorillen 6 auf der anderen Einschnittwand 5' gegenüberliegt.

Bei den in Fig. 2 bis 5 dargestellten Ausführungsvarianten sind die Brücken 7 mit Außenflächen 7a versehen, die sich am Niveau der jeweiligen Einschnittwand 5, 5' befinden.

Die Mikrorillen 6 weisen ferner jeweils einen Boden 6a auf, dessen tiefste Stelle sich gegenüber der jeweiligen Rillenwand 5, 5' und senkrecht zu dieser ermittelt in einer Tiefe t₂ befindet, die 0,10 mm bis 1,00 mm, insbesondere 0,20 mm bis 0,50 mm, bevorzugt bis 0,30 mm, beträgt.

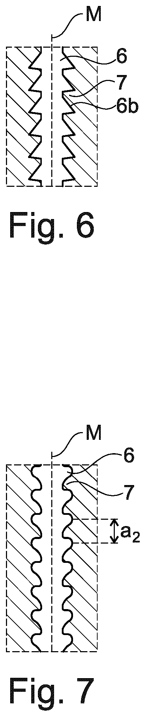

Die am Niveau der Einschnittwände 5, 5' ermittelte Breite b₂ der Mikrorillen 6 beträgt ebenfalls 0,10 mm bis 1,00 mm, insbesondere 0,20 mm bis 0,50 mm, bevorzugt bis 0,30 mm. Die Mikrorillen 6 weisen ferner einen gegenseitigen Abstand a₂ auf, welcher bei Ausführungen mit als Stegen ausgebildeten Brücken 7 zwischen den Mikrorillen 6 der Breite der Brücken 7 am Niveau der Einschnittwände 5, 5' entspricht und 0,05 mm bis 1,00 mm, insbesondere 0,10 mm bis 0,50 mm, bevorzugt bis 0,30 mm, beträgt. Bei Ausführungen von Mikrorillen- Strukturen mit im Querschnitt gerundeten Brücken 7 (Fig. 7) entspricht der gegenseitige Abstand a₂ dem Abstand zwischen den Mitten der tiefsten Stellen der Böden 6a der Mikrorillen 6, wobei dieser Abstand der Breite b₂ der Mikrorillen 6 entspricht.

Nachfolgend wird auf die einzelnen Ausführungsbeispiele eingegangen.

Fig. 2 zeigt eine Ausführungsform der Mikrorillen 6 mit einem U-förmigen Querschnitt mit einem parallel zu den Einschnittwänden 5, 5' verlaufenden Boden 6a und im rechten Winkel zu den Einschnittwänden 5, 5 verlaufenden Rillenflanken 6b.

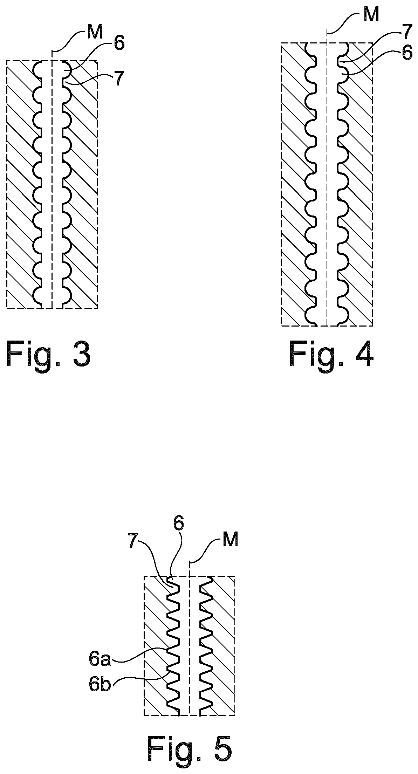

Fig. 3 und Fig. 4 zeigen jeweils eine Ausführungsform, bei welcher die Mikrorillen 6 im Querschnitt bogen- oder kuppelförmig gerundet sind, insbesondere entlang eines Kreisbogens (Fig. 4), beispielsweise eines Halbkreises.

Bei den in Fig. 5 und Fig. 6 gezeigten Ausführungsformen weisen die Mikrorillen 6 einen dreieckähnlichen Querschnitt auf. In Fig. 5 sind zwei zum Boden 6a, welcher als schmales Plateau ausgeführt ist, verlaufende Rillenflanken 6b vorhanden, die analog zu den Seiten eines gleichschenkeligen Dreiecks verlaufen. In Fig. 6 verlaufen die Rillenflanken 6b spitz zusammen und weisen unterschiedliche Längen auf. Dadurch bilden die Mikrorillen 6 an den Einschnittwänden 5, 5' eine sägezahnförmige Struktur.

Fig. 7 zeigt eine Ausführungsvariante mit Mikrorillen 6 und Brücken 7, die im Querschnitt jeweils gleichsinnig schräg verlaufende gerundete Wölbungen sind.

Eine Vielzahl weiterer, gerundeter und/oder geometrischer Querschnittsformen für die Mikrorillen 6 und die Brücken 7 ist möglich.

Die Anzahl der Mikrorillen 6 pro Einschnittwand 5, 5' beträgt fünf bis einhundert, insbesondere zehn bis fünfzig.

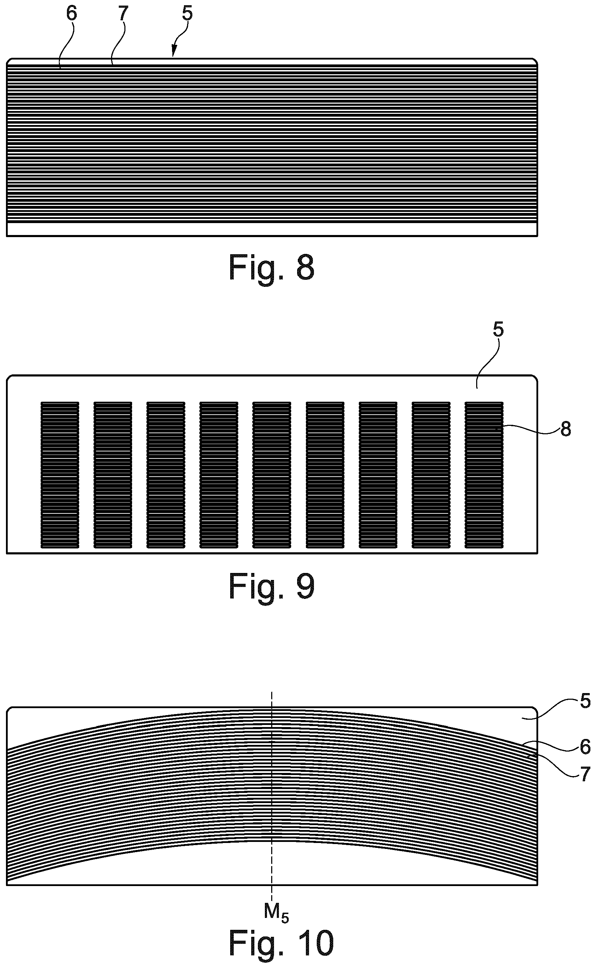

Fig. 8 zeigt eine schematische Ansicht einer Einschnittwand 5 mit einer Vielzahl von parallel zueinander und parallel zur Laufstreifenperipherie, daher gerade verlaufenden Mikrorillen 6 und Brücken 7, die jeweils eine der dargestellten und beschriebenen Querschnittsformen aufweisen können und die quer über die Einschnittwänd 5 verlaufen.

Fig. 9 zeigt anhand einer Ansicht einer Einschnittwand 5 eine Alternative des Verlaufs bzw. der Anordnung von Mikrorillen 6 in Streifenform, wobei die Streifen 8 in radialer Richtung und zueinander unter einem Abstand verlaufen und eine konstante Breite von beispielsweise 3,00 mm bis 10,00 mm aufweisen.

Fig. 10 zeigt eine Ausführungsvariante, bei welcher die Mikrorillen 6 und die Brücken 7 über die Einschnittwand 5' in Form von symmetrisch zur Mitte M₅ der Einschnittwand 5' parallelen Bögen verlaufen.

Bei weiteren nicht dargestellten Ausführungsvarianten verlaufen die Mikrorillen 6 unter einem spitzen Winkel bis zu einem rechten Winkel zu den Einschnittkanten 4b an der Laufstreifenperipherie, wobei auch ein beliebiger bogenförmiger oder gewellter Verlauf möglich ist. Bei anderen Ausführungsvarianten sind die Mikrorillen 6 auf Einschnittwänden ausgebildet, die eine in Erstreckungsrichtung des Einschnitts quer über das Profilpositiv und/ oder in radialer Richtung verlaufende Zick-Zack- oder Wellenform oder eine sonstige 3D-Struktur aufweisen.

### Bezugszeichenliste

- 1: Profilblock
- 2: Umfangsrille
- 3: Querrille
- 4: Einschnitt
- 4a: Einschnittgrund
- 4b: Einschnittkante
- 5, 5': Einschnittwand
- 6: Mikrorille
- 6a: Boden
- 6b: Rillenflanke
- 7: Brücke
- 7a: Außenfläche
- 8: Streifen
- a₁: Breite
- a₂: Abstand (zwischen Mikrorillen 6)
- b₁: Breite (Einschnitt4)
- b₂: Breite (Mikrorille 6)
- M: Mittellinie
- M₅: Mitte
- t₁: Tiefe (Einschnitt 4)
- t₂: Tiefe (Mikrorille 6)

## Patentansprüche

1. Fahrzeugreifen mit einem Laufstreifen mit Profilpositiven, wie Profilblöcken (1) oder Profilrippen, mit Einschnitten (4) mit zwei sich in radialer Richtung erstreckenden Einschnittwänden (5, 5'), die zueinander einen insbesondere konstanten gegenseitigen Abstand, welcher der Einschnittbreite (b₁) entspricht, von 0,30 mm bis 1,50 mm, insbesondere 0,40 bis 1,00 mm aufweisen, wobei jede Einschnittwand (5, 5') mit einer Struktur aus parallel zueinander verlaufenden Mikrorillen (6) und am Niveau der Einschnittwände (5, 5') befindlichen Brücken (7) zwischen den Mikrorillen (6) versehen ist, wobei die Mikrorillen (6) eine senkrecht zu den Einschnittwänden (5,5') ermittelten Tiefe (t₂) von 0,10 mm bis 1,00 mm und eine am Niveau der Einschnittwände (5, 5') ermittelte Breite (b₂) von 0,10 mm bis 1,00 mm aufweisen, und wobei die Strukturen aus den Mikrorillen (6) und Brücken (7) an den beiden Einschnittwänden (5, 5') übereinstimmen und aus gleich dimensionierten Mikrorillen (6) bestehen,
**dadurch gekennzeichnet,**
**dass** die Mikrorillen (6) auf der einen Einschnittwand (5) zu den Mikrorillen (6) auf der gegenüberliegenden Einschnittwand (5') parallel verlaufen.

2. Fahrzeugreifen nach Anspruch 1, **dadurch gekennzeichnet, dass** die Tiefe (t₂) der Mikrorillen (6) 0,20 mm bis 0,50 mm, bevorzugt bis 0,30 mm, beträgt.

3. Fahrzeugreifen nach Anspruch 1 oder 2, **dadurch gekennzeichnet, dass** die am Niveau der Einschnittwände (5, 5') ermittelte Breite (b₂) der Mikrorillen (6) 0,20 mm bis 0,50 mm, bevorzugt bis 0,30 mm, beträgt.

4. Fahrzeugreifen nach einem der Ansprüche 1 bis 3, **dadurch gekennzeichnet, dass** die zwischen den aufeinanderfolgenden Mikrorillen (6) befindlichen Brücken (7) am Niveau der Einschnittwände (5, 5') eine Breite von 0,05 mm bis 1,00 mm, insbesondere 0,10 mm bis 0,50 mm, bevorzugt bis 0,30 mm, aufweisen.

5. Fahrzeugreifen nach einem der Ansprüche 1 bis 3, **dadurch gekennzeichnet, dass** die Mikrorillen (6) und die Brücken (7) im Querschnitt Wölbungen sind und derart gestaltet sind, dass sie jeweils unmittelbar aneinander anschließen.

6. Fahrzeugreifen nach einem der Ansprüche 1 bis 5, **dadurch gekennzeichnet, dass** die Mikrorillen (6) auf der einen Einschnittwand (5) den Mikrorillen (6) auf der anderen Einschnittwand (5') gegenüberliegen.

7. Fahrzeugreifen nach einem der Ansprüche 1 bis 5, **dadurch gekennzeichnet, dass** die Mikrorillen (6) auf der einen Einschnittwand (5) gegenüber den Mikrorillen (6) auf der anderen Einschnittwand (5') in radialer Richtung versetzt sind.

8. Fahrzeugreifen nach einem der Ansprüche 1 bis 4, 6 oder 7 **dadurch gekennzeichnet, dass** die Mikrorillen (6) einen U-förmigen Querschnitt mit einem parallel zu den Einschnittwänden (5, 5') verlaufenden Boden (6a) und zwei im rechten Winkel zu den Einschnittwänden (5, 5) verlaufenden Rillenflanken (6b) aufweisen.

9. Fahrzeugreifen nach einem der Ansprüche 1 bis 4, 6 oder 7 **dadurch gekennzeichnet, dass** die Mikrorillen (6) im Querschnitt bogen- oder kuppelförmig gerundet sind, insbesondere entlang eines Kreisbogens, beispielsweise eines Halbkreises.

10. Fahrzeugreifen nach einem der Ansprüche 1 bis 4, 6 oder 7 **dadurch gekennzeichnet, dass** die Mikrorillen (6) einen dreieckigen oder dreieckähnlichen Querschnitt aufweisen.

11. Fahrzeugreifen nach einem der Ansprüche 1 bis 10, **dadurch gekennzeichnet, dass** die Anzahl der Mikrorillen (6) pro Einschnittwand (5, 5') fünf bis einhundert, insbesondere zehn bis fünfzig, beträgt.

12. Fahrzeugreifen nach einem der Ansprüche 1 bis 10, **dadurch gekennzeichnet, dass** die Mikrorillen (6) gerade verlaufen.

13. Fahrzeugreifen nach einem der Ansprüche 1 bis 12, **dadurch gekennzeichnet, dass** die Mikrorillen unter einem Winkel von bis zu 90° zur Laufstreifenperipherie oder insgesamt bogenförmig verlaufen.

14. Fahrzeugreifen nach einem der Ansprüche 1 bis 13, **dadurch gekennzeichnet, dass** die Struktur aus Mikrorillen (6) und Brücken (7) aus mehreren Streifen mit einer insbesondere konstanten Breite von vorzugsweise 3,00 mm bis 10,00 mm besteht.

15. Fahrzeugreifen nach einem der Ansprüche 1 bis 14, **dadurch gekennzeichnet, dass** die Einschnittwände (5, 5') unmittelbar an die Laufstreifenperipherie und den Einschnittgrund (4a) anschließend über einen Abschnitt mit einer Breite von mindestens 0,50 mm bis insbesondere bis zu 1,00 mm frei, von der Struktur aus Mikrorillen (6) und Brücken (7) sind.
